(19) Europäisches Patentamt
European Patent Office
Office européen des brevets

(11) **EP 3 361 877 B1**

(12) **EUROPEAN PATENT SPECIFICATION**

(45) Date of publication and mention
of the grant of the patent:
**17.04.2019 Bulletin 2019/16**

(51) Int Cl.:
**A23F 3/06** (2006.01)

(21) Application number: **16778757.1**

(22) Date of filing: **03.10.2016**

(86) International application number:
**PCT/EP2016/073552**

(87) International publication number:
**WO 2017/063906 (20.04.2017 Gazette 2017/16)**

(54) **TEA PRODUCT AND A METHOD OF PRODUCING IT**

TEEPRODUKT UND EIN VERFAHREN DERER HERSTELLUNG

PRODUIT DE THE ET PROCÉDÉ DE PRODUCTION D'UN PRODUIT DE THE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.10.2015 EP 15190010**

(43) Date of publication of application:
**22.08.2018 Bulletin 2018/34**

(73) Proprietors:
• **Unilever N.V.
3013 AL Rotterdam (NL)**
Designated Contracting States:
**AL AT BE BG CH CZ DE DK EE ES FI FR GR HR
HU IS IT LI LT LU LV MC MK NL NO PL PT RO RS
SE SI SK SM TR**
• **Unilever PLC
London, Greater London EC4Y 0DY (GB)**
Designated Contracting States:
**CY GB IE MT**

(72) Inventors:
• **BASAVARAJU, Lokesh
Bangalore 560 066 (IN)**
• **GUTTAPADU, Sreeramulu
Bangalore 560 066 (IN)**
• **SINGH, Gurmeet
Bangalore 560 066 (IN)**

(74) Representative: **Warner, Guy Jonathan
Unilever N.V.
Unilever Patent Group
Olivier van Noortlaan 120
3133 AT Vlaardingen (NL)**

(56) References cited:
WO-A1-2011/151237    WO-A1-2012/013519
WO-A2-02/069727    US-A- 3 873 745
US-A1- 2008 118 602

**Description**

**Technical Field**

The present invention relates to a tea product and more particularly the present invention relates to a black tea product.

**Background of the invention**

Tea is one of the most extensively consumed beverages in the world. There are different types of tea e.g. black tea, green tea, oolong tea, white tea etc. Among different types, black tea products are more popular. Black tea is generally prepared by the process which includes the steps of withering, macerating, fermenting and firing/drying. The characteristic colour, flavour and aroma of black tea are produced during fermentation. The term fermentation is traditionally used in the tea processing to refer to enzymatic oxidation. The tea is dried at high temperature after fermentation to arrest the enzyme action and to bring down the moisture to a low level.

Tea based beverages can be consumed either as a hot beverage or as a cold beverage or maybe as a beverage which is at ambient (-25° C) temperature. But, whatever way these tea based beverages are consumed, sensorials of these tea products are of prime concern. In case of black tea beverage, consumers consider sensorials as the prime factor. Sensorials of black tea product mainly include colour and haze. Colour imparts impact to the black tea liquor. It is believed that black tea with rich red coloured liquor is widely preferred by consumers. Consumers desire black tea products which produce a rich red coloured liquor with low haze.

There have been efforts to provide black tea products with enhanced red colour.

US2008/0118602 (Unilever, 2008) discloses a process for the manufacture of a tea product which is readily infusible and has improved red colour. The process comprises contacting black tea with ascorbic acid and/or its salts, an oxidizing agent and water for a period of at least 5 minutes followed by drying to prepare a tea product that is infusible in water at 5 to 100°C.

Lyphilisation of black tea leaves to retain the aromatic constituents is described in US 3873745 (Nestle, 1975). This describes a process for the separation of a solvent from a substance in solution or in suspension in this solvent, or containing this solvent, comprising solidifying the solvent and then separating it from the substance by sublimation at reduced pressure in a lyophilisation chamber, in which an atmosphere is created within the chamber consisting essentially of a gaseous medium capable of existing in condensed state at a temperature above -196°C and of having at that temperature a saturated vapour pressure not exceeding 2 torrs, the medium is then condensed on a cooled surface the temperature of which is such that the saturated vapour pressure of the medium does not exceed 2 torrs, and the solvent is then separated from the substance by sublimation and is condensed on the cooled surface.

We have also found that in whatever way a leaf tea product is brewed, the leaf tea waste left over after brewing the beverage contains a good amount of polyphenols which remain unused and go as waste after the brewing process. Polyphenols are considered to be the major constituents in most of the tea product. It is believed that the polyphenols provide the required taste (astringency, bitterness etc.) for a tea product and also provide various health benefits. Polyphenols are known to be one of the "tea goodies".

There are also been efforts to increase the polyphenols content in a tea product.

WO 2012/133901 (KANNO MINORU et.al., 2012) describes a polyphenol increasing agent for plant leaves that enables an increase in the storage life of plant leaves such as leaf vegetables and tea leaves, a polyphenol and amino acid increasing agent for plant leaves, a resin pellet, a plant leaf storage sheet, and a method for manufacturing a plant leaf storage sheet.

None of the prior art disclosed a tea product that delivers a liquor with enhanced red colour and reduced haze. Prior art does not disclose treating a made black tea product to produce a black tea product that delivers a liquor with enhanced red colour and reduced haze. Made black tea preferably refers to those products which has undergone the process of manufacturing of black tea (e.g. withering, maceration, fermentation and drying) and which have a moisture content of less than 5% by weight. Furthermore, prior art is silent about how to increase the extractability of the polyphenols from the leaf matrix to utilize the polyphenols that are already there in the leaf and which are otherwise discarded with the spent tea leaves as waste after brewing the beverage.

It is therefore an object of the present invention to provide a tea product that delivers a liquor with enhanced red color with less haze value.

It is another object of the present invention to provide a process of treatment of a ready-made black tea product to produce a black tea product that delivers a liquor with enhanced red color with reduced haze.

It is yet another object of the present invention to provide a process which improves the extractability of the polyphenols from the tea leaf.

The present inventors while working extensively to solve these problems have surprisingly found that adding water in a particular ratio to the made black leaf tea product followed by freeze-drying produces a tea product that delivers a liquor with enhanced red colour and less haze value.

## Summary of the invention

In a first aspect the present invention provides a process for producing a tea product comprising the steps of;

a) providing a black leaf tea with a moisture content less than 5%;
b) adding water in an amount of 30 to 80% by weight of the black leaf tea of step (a); and,
c) freeze-drying or vacuum drying the black tea leaf of step (b) under vacuum of less than 600 Pascal and at a temperature of -60°C to + 60°C to obtain the tea product.

In a second aspect the present invention provides a tea product as obtained and/or obtainable by the process of first aspect wherein the surface reflectance of tea product is greater than 30% as measured at a wavelength of 750 nm.

Any feature of one aspect of the present invention may be utilized in any other aspect of the invention. The word "comprising" is intended to mean "including" but not necessarily "consisting of" or "composed of." In other words, the listed steps or options need not be exhaustive. Except in the operating and comparative examples, or where otherwise explicitly indicated, all numbers in this description indicating amounts of material or conditions of reaction, physical properties of materials and/or use are to be understood as modified by the word "about". Numerical ranges expressed in the format "from x to y" are understood to include x and y. When for a specific feature multiple preferred ranges are described in the format "from x to y", it is understood that all ranges combining the different endpoints are also contemplated.

## Detailed description of the invention

"Tea" for the purposes of the present invention means material from Camellia sinensis var. sinensis and/or Camellia sinensis var. assamica. Especially preferred is material from var. assamica as this has a higher level of tea actives than var. sinensis.

"Leaf tea" for the purposes of this invention means a tea product that contains tea leaves and/or stem in an un-infused form, and that has been dried to a moisture content of less than 5% by weight (i.e. "made tea").

"Black tea" refers to substantially fermented tea.

"Fermentation" refers to the oxidative and hydrolytic process that tea undergoes when certain endogenous enzymes and substrates are brought together, e.g., by mechanical disruption of the cells by maceration of the leaves. During this process colourless catechins in the leaves are converted to a complex mixture of yellow and orange to dark-brown polyphenolic substances.

"Fresh tea leaves" refers to tea leaves, buds and/or stem that have never been dried to a water content of less than 30% by weight, and usually have water content in the range 60 to 90%.

The present invention provides a process for producing a tea product comprising the steps of:

a) providing black leaf tea with a moisture content of less than 5%;
b) adding water in an amount of 30 to 80% by weight of the black leaf tea of step (a); and,
c) freeze-drying or vacuum drying the black tea leaf of step (b) under vacuum of less than 600 Pascal and at a temperature of -60°C to + 60°C to obtain the tea product.

## Process of producing the tea product

### Step (a):

The starting material of the process of the present invention is black leaf lea. The black leaf tea, as explained above, is a fermented leaf tea with moisture content less than 5% by dry weight. The starting material may preferably a made black leaf tea product available in the market which has moisture content of less than 5%.

The black leaf tea is preferably be prepared by using a process comprising the steps of:

i. taking fresh tea leaf;
ii. subjecting the leaf to comminution ; and
iii. fermenting the comminuted leaf by keeping the leaf at a temperature of 15 to 35°C for 15 minutes to 3 hours.
iv. drying the fermented tea leaf at a temperature of 50 to 150°C.

Before comminution, the fresh tea leaf preferably undergoes a process known as withering. Withering is a process where plucked tea leaf are allowed to lose moisture over a period of time, preferably in a shallow trough, where biochemical reactions occur causing formation of many beneficial compounds including aroma compounds. Preferably, to speed-up the moisture loosing process, fresh dry air is passed in a regulated manner through the leaf. The tea leaf may include leaf, buds, stem and other parts of the tea plant. The time of withering is preferably in the range of 10 to 96 hours, more preferably 10 to 72 hours, even more preferably for 12 to 48 hours and most preferably 24 to 72 hours.

The withered leaf may preferably be subjected to comminution. This may preferably be carried out by crushing, tearing and curling which is known as CTC. One or more CTC steps may be carried out. In this step the withered leaf breaks up and releases enzymes that exist in the leaf.

Alternately after the withering, the withered tea leaf is rolled in an orthodox roller or comminuted in a rotorvane or combination thereof. During these steps precursors present in the tea leaf become amenable to the enzymes.

The comminuted tea leaf preferably undergoes fermentation. Fermentation is preferably carried out by keeping the leaf at a temperature of 15 to 35°C for from 15 minutes to 3 hours. Preferably the temperature of the fermentation is between 25 to 35°C and more preferably around 30 to 35°C. The time for fermentation preferably is from 30 minutes to 3 hours and more preferably 1 to 3 hours. In this stage the leaf undergoes enzymatic reactions which produce the typical black tea characteristics.

The fermented tea leaf may then preferably be dried. During drying step, the incubated tea leaf is dried to moisture content preferably less than 10% by total weight of the tea leaf, more preferably less than 5% by total weight of the tea leaf.

The drying step is preferably carried out by thermal drying or vacuum drying.

Thermal drying is preferably carried out by contacting the leaf with air; with the temperature of air being preferably 50 to 150°C, more preferably 60 to 130°C, most preferably 80 to 130°C. Thermal drying may be carried out in any conventional dryer. However, a fluidized bed dryer or a tray dryer is particularly preferred for thermal drying.

The leaf can also be dried by vacuum drying. During vacuum drying the tea leaf is subjected to an absolute pressure of preferably from 5 to 500 mm Hg, more preferably from 50 to 300 mm Hg and most preferably from 100 to 200 mm Hg. Vacuum drying is carried out at a temperature in the range of preferably 20 to 70°C, more preferably 25 to 60°C and most preferably 30 to 55°C. Vacuum drying may be carried out in any suitable vacuum drier, preferably in a rotary vacuum drier.

In an alternative embodiment of the present invention, preferably the black leaf tea product is prepared by using a process comprising the steps of:

> i. taking fresh tea leaf;
> ii. incubating the fresh leaf at a temperature in the range 4°C to 60°C under anaerobic conditions for a period of 4 to 36 hours;
> iii. subjecting the incubated leaf to comminution; and
> iv. fermenting the comminuted leaf by keeping the leaf at a temperature of 15 to 35°C for 15 minutes to 3 hours.
> v. drying the fermented tea leaf at a temperature of 50 to 150°C.

Step (i) comprises taking fresh tea leaf. The fresh leaf may be selected as two leaves and a bud, three leaves and a bud, or more than three leaves and a bud. The duration of time between step (i) and step (ii) is preferably less than 24 hours, more preferably less than 12 hours and most preferably less than 8 hours. However, it is possible that the duration of time between step (i) and step (ii) is longer than 24 hours if the tea leaf is stored at temperature less than 5 °C.

Step (ii) includes incubating the selected leaf at a temperature in the range 4°C to 60°C under anaerobic conditions for a period of 4 to 36 hours. The term "anaerobic conditions" as used herein means that the gas phase in contact with the leaf has less than 3% oxygen by volume. The amount of oxygen in the gas phase in contact with the leaf is preferably less than 2%, more preferably less than 1%. It is particularly preferred that the gas phase in contact with the leaf is substantially free of oxygen.

The anaerobic conditions in the step (ii) above are optionally achieved by:

> A. placing the fresh tea leaf in a container, and closing the container, or;
> B. placing the tea leaf in a container, purging a gas other than oxygen through the container, and closing the container, or placing the leaf in an airtight chamber or under vacuum.

By placing the fresh leaf in a container and closing the container, the oxygen concentration in the gas phase decreases with time and anaerobic conditions are achieved after keeping the container closed for a certain amount of time. The container is closed for a duration of preferably greater than about 3 hours, more preferably greater than 4 hours and most preferably greater than about 6 hours or even greater than about 8 hours.

Alternatively and more preferably, the anaerobic conditions are achieved by placing the leaf in a container, purging a gas other than oxygen through the container and closing the container. The gas other than oxygen is preferably nitrogen or carbon dioxide, more preferably nitrogen.

Once the container is closed in step (A) or (B) above, there is no particular restriction as to the pressure in the container. The pressure inside the closed container is preferably from 1 to 1000 mm Hg absolute, more preferably 10 to 800 mm Hg absolute and most preferably about 20 mm Hg absolute.

It is preferred that the moisture loss from the leaf during the step (ii) is as low as possible. This is advantageously and conveniently achieved by carrying out the step (ii) under closed conditions. The incubated tea leaf after step (ii) comprises water in the range of preferably from 70 to 75% by weight.

In step (ii) the temperature is in the range of 4°C to 60°C, preferably in the range 4 to 55°C, more preferably in the range 10 to 40°C.

The fresh leaf is incubated under anaerobic conditions for a period of 4 to 36 hours, preferably for a period of 6 to 30 hours, more preferably for a period of 8 to 25 hours, most preferably for a period of 10 to 24 hours.

Rest of the steps (iii), (iv) and (v) which relates to comminution, fermentation and drying respectively are same as explained in the last section of this specification.

**Step (b):**

In step (b), water is added to the black leaf tea of step (a) in an amount of 30 to 80% by weight of the black leaf tea. The amount of water added is preferably in the range of 40 to 70% and more preferably is in the range of 50 to 70% by weight of the black leaf tea.

After adding the water, the mixture of water and the tea leaf may preferably be agitated/stirred to obtain a uniform mixture.

**Step (c):**

In step (c), the resultant mixture (leaf-water) is dried by freeze-drying or vacuum drying under vacuum of less than 600 Pascal and at a temperature of -60°C to + 60°C to obtain the tea product.

Freeze-drying is a drying process which comprises three steps. In first step tea leaves are frozen at subzero temperatures. The freezing temperature is in the range of 0 to - 60°C and more preferably in the range of -20 to -40°C. After sample is completely frozen, primary drying is initiated by applying vacuum of preferably around 500 Pascal and more preferably in the range of 400 to 500 Pascal. At the end before removing the sample from freeze drier, a secondary drying step is initiated by increasing chamber temperature in the range of 10 to 60°C and more preferably in the range of 20 to 30°C.

After secondary process is completed the moisture content of the resulting product is less than 5% by weight of the product.

In case of present invention, freeze-drying is carried out under the conditions specified below. In first step the mixture (leaf-water) obtained in step (b) is frozen at subzero temperatures. The freezing temperature is in the range of 0 to -60°C and more preferably in the range of -20 to -40°C. After it is completely frozen, primary drying is initiated by applying vacuum. Vacuum applied in the process is in the range of 1- 400 Pascal, preferably 6 to 250 Pascal and most preferably 10 to 100 Pascal. The temperature during primary drying step is in between 10 to 60°C and more preferably 10 to 30 °C. At the end before removing the sample from freeze-drier, secondary drying step initiated wherein the temperature is in the range of 10 to 60°C and more preferably in the range of 20 to 30°C. After secondary drying process is completed, the tea product is removed. The moisture content at this stage this generally be around less than 5% by weight of the tea product.

The freeze drying process may preferably be achieved using a freeze drier.

In case of vacuum drying, it may preferably carried out at a temperature in the range of preferably 20 to 60°C, more preferably 25 to 60°C and most preferably 30 to 55°C. Vacuum drying may be carried out in any suitable vacuum drier, preferably in a rotary vacuum drier. The vacuum applied is similar as explained in the previous section which relates to freeze drying.

**The tea product**

The present invention also provides a product as obtained/obtainable by the process of the present invention.

The tea product as obtained/obtainable by the process of the present invention has a surface reflectance value measured at a wavelength of 750 nm that is greater than 30%, preferably greater than 35% and most preferably greater than 40%.

Surface reflectance represents the darkness in appearance of the tea product. In the present case the surface reflectance of the tea product is measured at a wavelength of 750 nm. If the tea is intense black in colour, it absorbs maximum light at 750 nm and reflects little light, hence the reflectance value is lower. If the tea is towards brown in colour, it absorbs relatively less light and reflects higher amount of light, hence it gives higher reflectance value at 750 nm. Therefore with the increase in darkness of the colour/appearance of the tea product, the surface reflectance value will go down. This particular parameter provides a signature characteristics to the tea product made by the process of the present invention.

The bulk density of the tea products obtained/obtainable by the process of the present invention is lower than 0.36 g/mL more preferably lower than 0.25 g/mL and most preferably lower than 0.20 g/mL.

The tea products are graded based on their sizes. Mesh openings ranging from 0.42 millimeters to 2.38 millimeters are generally used for grading. Tea grading is carried out through mechanical sorting process using standard meshes 12, 16, 22 & 30. These are Broken Pekoe (BP) grade (Size Range: 1mm to 1.4mm), Pekoe Fannings (PF) grade (1 to 0.710mm), Pekoe Dust (PD) grade (0.5 to 0.710mm) and Dust grade (< 0.5mm).

Bulk density is defined in terms of mass per unit volume. Considering the characteristics of a tea particle it is observed that the smaller the grades have higher bulk density than larger grades. Bulk density is one of the key parameters for tea bag market where it requires precise programming of tea bag machine to fill tea leaf in the given weight to avoid overfilling/less filling in tea bags. It also indirectly reflects the porosity of tea granules which is one of the important parameter which affects infusion performance of tea products

A leaf tea blend which comprises 5 to 50%, preferably 10 to 40% and most preferably 20 to 30% of a tea product as obtained/obtainable by the process of the present invention is also within the scope of the present invention.

A tea blend is a mixture of two or more different tea products. The tea blend can have different sensorials than the individual components mixed to make the blend. In tea industry the final packaged tea product is often produced by blending different tea products to meet the preference of different kinds of consumers.

Now the invention will be demonstrated with the help of following non-limiting examples.

**Examples:**

Measurements methods:

(a) Colour measurement:

For the colour measurement tea infusions were prepared. The infusion was prepared by adding 200 mL of boiling water to 2g of tea leaf, allowing it to stand for 2 minutes and stirring once before straining.

Ultra scan visible range colour measurement spectrophotometer (Model: UltraScan Vis, made in USA) is a Dual beam xenon flash Spectrophotometer (Hunter lab) used to measure the black tea infusion colour. The dual beam optical system uses two diode arrays and has an effective bandwidth of 10nm. Measurements were made using a quartz cuvette of 10 mm path length. Tea infusion was filled up to the brim in the cuvette and placed in the instrument for colour measurement. The instrument was calibrated using a standard white tile (Hunterlab Duffuse/8°, mode-RSEX, Port-1" and area- large) in accordance with the instructions provided in the instructions manual. The L*a*b* values were measured at room temperature (around 25°C).

The maximum value for L* is 100, which represents a perfect reflecting diffuser. The minimum is L*=0, which represents black. The a* and b* axes have no specific numerical limits. Positive a* is red and negative a* is green. Similarly, positive b* is yellow and negative b* is blue.

(b) Measurement of Haze:

Haze measurement was also performed using the Ultra scan visible range colour measurement spectrophotometer as explained above. Haze measurement indicates how "clear" the sample is. E.g. in case of deionized water the haze value is approximately 0%. The infusions were prepared as explained in the previous section followed by haze measurement using the spectrophotometer.

(c) Surface reflectance measurement:

Surface reflectance was also measured using the same spectrophotometer as described in the previous sections. Ultra scan VIS is a Dual beam xenon flash Spectrophotometer with the wavelength range from 360 to 780 nm. This instrument can measure both reflected & transmitted colour of a product. For the present purpose the surface reflectance was measured at a wavelength of 750 nm. Leaf tea products were filled in quartz cuvette of 50mm path length under measured under reflectance (RSIN: Reflectance Specular Included) mode. Leaf tea products were filled up to the brim in the cuvette and placed in the instrument for measurement. The instrument was calibrated using a standard white tile (Hunterlab Duffuse/8°, mode-RSIN) before doing the samples.

(d) Bulk density measurement:

The bulk density of the tea composition was measured using the Tapped Bulk density method. Bulk density was measured in a Bulk Density Meter (Tapping Density meter) BDM 5003 (Weigh Control Systems Pvt. Ltd, India). 100 g of the sample was taken in a 500 mL measuring flask and placed on a vibrating set at amplitude of 3 mm and with 350 vibrations/minutes. Volume reading was taken after dismounting the measuring flask.

$$\text{Tapped Bulk Density (g/mL)} = 100/\text{volume reading of the measuring flask}$$

(e) Delivered Polyphenols (DPP) Measurement:

Delivered polyphenols means, the amount of polyphenols available at the end cup after brewing. For measuring delivered polyphenols content, the same ISO method for the determination of content of total polyphenols in tea - Colorimetric method using Folin-Cicalteu reagent (ISO 14502-1:2005) was used. However instead of the leaf, infusion of the tea leaf was prepared by brewing 2 g of black tea in 200 mL of boiling water as described previously.

(f) Delivered Soluble Solids (DSS) measurement:

Delivered Soluble Solids (DSS) means, the amount of soluble tea solids available at the end cup after brewing. For this purpose 2 g of black tea was taken in 200 mL of boiling water. After 2 minutes, the liquor was then filtered through a Whatman ® 4 filter paper using vacuum pump. 100 mL of aliquot of each black tea infusions was then taken in a previously weighed aluminium pan and evaporated on a water bath to dryness. The pans were heated in the oven at 100°C for 15 hours followed by cooling them in a desiccator and weighed. Then the Soluble solid content was calculated from the difference in the weight of pans.

Preparation of the different tea products

Example A:

Fresh tea leaves were collected from South Indian tea plantation followed by 18 hours of withering. After that the tea leaves were subjected to CTC (cut tear curl) for 4 times to obtain macerated dhool. The macerated dhool was then fermented (exposed to air at 25°C) for 90 minutes followed by drying the fermented dhool at 120°C (thermal drying) till the moisture level went down to less than 5% by weight to obtain a black leaf tea product.

Example B:

This example is same as Example A except the drying step was performed by freeze-drying. The freeze drying process was performed using a freeze drier (Model Lyomax ® from Lyophilization Systems India Pvt.).The process of freeze-drying was carried out by keeping the fermented dhool (as explained in Example A) in freeze dryer chamber and the dhool was frozen at -40°C. After the dhool was completely frozen, primary drying was initiated by applying 500 Pascal vacuum; chamber temperature during primary drying was kept at approximately 10°C. At the end before removing the material from the freeze drier, a secondary drying step initiated by increasing chamber temperature to approximately 25°C. After secondary process is completed, material was removed and the moisture content of samples found to be less than 5%.

Example C:

In this example the black leaf tea product of Example A was taken followed by addition of 10% (by weight of the black leaf tea product) of de-ionized water. After that the mixture was thoroughly mixed to make sure the distribution of water was even. After that the mixture was freeze-dried. The conditions and the process of freeze drying was same as mentioned in Example B.

Example D:

This example is same as Example C except 15% (by weight of the black leaf tea product) of de-ionized water was added.

Example E:

This example is same as Example C except 20% (by weight of the black leaf tea product) of de-ionized water was added.

Example 1:

This example is same as Example C except 30% (by weight of the black leaf tea product) of de-ionized water was added.

Example 2:

This example is same as Example C except 50% (by weight of the black leaf tea product) of de-ionized water was added.

Example 3:

This example is same as Example C except 65% (by weight of the black leaf tea product) of de-ionized water was added.

Example 4:

This example is same as Example C except 72% (by weight of the black leaf tea product) of de-ionized water was added.

Example 5:

In this example the black leaf tea product was prepared by taking fresh tea leaves from South Indian tea plantation. These leaves were then placed in an air-tight aseptic plastic bag, sealed and incubated for 18 hours at around 25°C. After that the tea leaves were subjected to CTC (cut tear curl) for 4 times to obtain macerated dhool. The macerated dhool was fermented (exposed to air at 25°C) for 90 minutes. After the fermentation the fermented dhool was dried at 130°C in a tray drier for about 20 minutes until it reached a moisture content less than 5% by weight to obtain a black leaf tea product.

This black leaf tea product was taken followed by addition of 65% (by weight of the black leaf tea product) of de-ionized water. After that the mixture thoroughly mixed to make sure the distribution of water was even. After that the mixture was freeze-dried. The conditions and the process of freeze drying was same as mentioned in Example B.

All the above tea products were then analyzed for a* and haze value using the procedure as described above.

The results are summarized in the following Table 1.

Table 1

| Example Number | a* Value | Haze Value |
|---|---|---|
| A | 7.78 | 6.10 |
| B | 18.56 | 75.34 |
| C | 8.02 | 7.30 |
| D | 8.45 | 6.80 |
| E | 8.60 | 6.50 |
| 1 | 10.71 | 7 |
| 2 | 13.23 | 9.70 |
| 3 | 17.34 | 15.43 |
| 4 | 17.45 | 20.34 |
| 5 | 17.67 | 20.45 |

From the above Table, it is evident that the tea products made by the process of the present invention provides higher a* value with very little haze, which is preferred by consumers. Furthermore it can be seen from the above table that a* increases with increasing amount of water. However, at lower amount of water (less than 30%), there is no benefit on a* value. The a* value of Example C, D and E are nearly constant and there is no effect of water addition. At the same time, the examples which are inside the scope of present invention (Examples 1 to 5) shows significant increase of a* value whereas the increase in haze value is not high. Therefore, there is a minimum water requirement for obtaining the benefit. At 10% (Example C) and 20% (Example E) level of water addition, there is no benefit.

Another set of samples were prepared wherein instead of freeze drying, vacuum drying was applied. The vacuum drying process was performed using a vacuum drier (Model Lyomax ® from Lyophilization Systems India Pvt.) wherein the temperature was set at 30°C and the vacuum was 500 Pascal.

The details of the samples are given below:

Example G

In this example the black leaf tea product of Example A was taken followed by addition of 10% (by weight of the black leaf tea product) of de-ionized water. After that the mixture was thoroughly mixed to make sure the distribution of water was even. After that the mixture was vacuum-dried.

Example H:

This example is same as Example G except 15% (by weight of the black leaf tea product) of de-ionized water was added.

Example I:

This example is same as Example G except 20% (by weight of the black leaf tea product) of de-ionized water was added.

Example 6:

This example is same as Example G except 30% (by weight of the black leaf tea product) of de-ionized water was added.

Example 7:

This example is same as Example G except 50% (by weight of the black leaf tea product) of de-ionized water was added.

Example 8:

This example is same as Example G except 65% (by weight of the black leaf tea product) of de-ionized water was added.

Example 9:

This example is same as Example G except 72% (by weight of the black leaf tea product) of de-ionized water was added.

All the above tea products were then analyzed for a* and haze value using the procedure as described above.

The results are summarized in the following Table 2.

Table 2

| Example Number | a* Value | Haze Value |
| --- | --- | --- |
| G | 6.24 | 5.43 |
| H | 6.45 | 5.86 |
| I | 6.95 | 6.45 |

(continued)

| Example Number | a* Value | Haze Value |
|---|---|---|
| 6 | 9.86 | 7.45 |
| 7 | 14.23 | 10.23 |
| 8 | 18.34 | 16.45 |
| 9 | 19.34 | 18.56 |

This data shows similar effect as concluded in Table 1 for freeze drying. It is evident from Table 2 that, up to 20% of water addition there are not much changes of a* value (Examples which are outside the scope of the present invention). However there is a significant increase in the a* value when the water addition is 30% or more for Examples 6 to 9 (which are within the scope of the present invention) whereas the increase in haze value is not high.

Measurement of Bulk density of the products:

The bulk density of the tea products was also measured. Before measuring the bulk density, the tea products were graded according to their size e.g. BP, PF, PD, Dust as described before. The bulk density of these products were then measured using the procedure as described previously in this specification. The results are summarized below in Table 3:

Table 3

| Example No. | Bulk Density (g/mL) | | | |
|---|---|---|---|---|
| | BP grade | PF grade | PD grade | Dust grade |
| A | 0.36 | 0.38 | 0.39 | 0.44 |
| 3 | 0.26 | 0.25 | 0.24 | 0.28 |
| 5 | 0.20 | 0.20 | 0.21 | 0.26 |

From Table 3 it is clear that the tea products that are within the scope of the present invention provides tea products with much lower bulk density than the control (Example A, outside the scope of the present invention). It is evident from the above table that the tea products produced by the process of the present invention has a bulk density of less than 0.30 g/mL.

Total polyphenol content (TPP), total soluble solids content (TSS) and the surface reflectance were also measured for different tea products along with suitable control using the procedure as described previously in this specification. The results are summarized below in Table 4:

Table 4

| Example No. | DPP (wt.%) | DSS (wt.%) | Surface Reflectance |
|---|---|---|---|
| A | 8.03 | 25.68 | 20.93 |
| 3 | 11.04 | 31.95 | 42.59 |
| 5 | 12.27 | 36.97 | 44.91 |

From the Table 4 it is evident that the tea products produced by using the process of the present invention has much higher amount of DPP and DSS when compared with control. In other words, the tea product made using the process of Example 3 and 5 have much higher DPP and DSS than tea product made by using the process of Example A. It can also be well seen from the above table that the surface reflectance value of the tea products made by the process of the present invention (Example 3 and 5) in much higher than the control (Example A).

Effect of addition of water on infusion kinetics of the black leaf tea:

For this experiment 2 g of black leaf tea of Example A, Example E and Example 3 were brewed separately in 250 mL each of hot water (at 90 deg C) with continuous stirring. After certain intervals, the samples were taken for the measurement of colour absorbance at 440 nm using spectrophotometer (Shimadzu UV 1601). The higher the value of absorbance, the better is the infusion.

The results are summarized below in Table 5;

Table 5

| Infusion Time (Sec) | Absorbance (440 nm) | | |
|---|---|---|---|
| | Example A | Example E | Example 3 |
| 30 | 0.26 | 0.25 | 0.33 |
| 60 | 0.47 | 0.48 | 0.69 |
| 90 | 0.60 | 0.62 | 0.9 |
| 120 | 0.68 | 0.70 | 1.05 |

From the above table, it is evident that Example 3 provides much better infusion at any point of time. Whereas water addition at a level of 20% (Example E) only able to provide an infusion to that of a regular black leaf tea (Example A) product.

Effect of addition of water on sensorial evaluation of the black leaf tea infusions:

Tea infusions (for Example A, Example E and Example 3) were prepared by infusing 2 g of leaf tea in 200 mL of freshly boiled water for 2 minutes without stirring and the readings were taken using the protocol described below. A panel of 12 trained panelist were asked to assess the sensorial score of the infusion as prepared above in terms of darkness, redness, bitterness and astringency. The score was given on a scale of 10, where 1 represented the lowest and 10 represented the highest. The average value of the score given by the panelist are summarized below in Table 6.

Table 6

| Sensorial Parameter | Average score of 12 panelist | | |
|---|---|---|---|
| | Example A | Example E | Example 3 |
| Darkness | 5.60 | 5.70 | 7.04 |
| Redness | 5.90 | 5.95 | 7.22 |
| Bitterness | 3.24 | 3.31 | 6.92 |
| Astringency | 3.35 | 3.30 | 6.17 |

From the above table, it is evident the evaluation score for Example 3 (within the scope of the present invention) is far better than Example A or Example E. hence it is clear that the product obtained by way of present invention is superior than the controls.

**Claims**

1. A process for producing a tea product comprising the steps of;

   a) providing black leaf tea with a moisture content of less than 5%;
   b) adding water in an amount of 30 to 80% by weight of the black leaf tea of step a); and,
   c) freeze-drying or vacuum drying the black tea leaf of step b) under vacuum of less than 600 Pascal and at a temperature of -60°C to +60°C to obtain the tea product.

2. A process as claimed in claim 1 wherein the water added in step (b) is in an amount of 40 to 70% by weight of black leaf tea.

3. A process as claimed in claim 1 or claim 2 wherein the black leaf tea provided in step (a) is obtained by processing *Camellia sinensis* plant.

4. A process as claimed in any one of claims 1 to 3 wherein the black leaf tea provided in step (a) is prepared using a process comprising the steps of:

  i. taking fresh tea leaf;
  ii. subjecting the leaf to comminution; and
  iii. fermenting the comminuted leaf by keeping the leaf at a temperature of 15 to 35°C for 15 minutes to 3 hours.
  iv. drying the fermented tea leaf at a temperature of 50 to 150°C.

5. A process as claimed in claim 4 wherein there is a step of withering before step ii.

6. A process as claimed in any one of claims 1 to 3 wherein the black leaf tea provided in step (a) is prepared by a process comprising the steps of:

  i. taking fresh tea leaf;
  ii. incubating the fresh leaf at a temperature in the range 4°C to 60°C under anaerobic conditions for a period of 4 to 36 hours;
  iii. subjecting the incubated leaf to comminution; and
  iv. fermenting the comminuted leaf by keeping the leaf at a temperature of 15 to 35°C for 15 minutes to 3 hours;
  v. drying the fermented tea leaf at a temperature of 50 to 150°C.

7. A process as claimed in claim 6 wherein the anaerobic conditions are achieved by:

  A. placing the fresh tea leaf in a container, and closing the container, or;
  B. placing the tea leaf in a container, purging a gas other than oxygen through the container, and closing the container, or placing the leaf in an airtight chamber or under vacuum.

8. A leaf tea blend which comprises 5 to 50% of a tea product as obtained by any one of claims 1 to 7 wherein the tea product has a surface reflectance of greater than 30% as measured at a wavelength of 750 nm and/or wherein the bulk density of the tea product is less than 0.3 g/mL.

**Patentansprüche**

1. Verfahren zur Herstellung eines Teeprodukts, umfassend die Schritte:

  a) Bereitstellen von schwarzem Blatttee mit einem Feuchtigkeitsgehalt von weniger als 5%;
  b) Zugeben von Wasser in einer Menge von 30 bis 80 Gewichts-% des schwarzen Blatttees des Schritts a); und
  c) Gefriertrocknen oder Vakuumtrocknen des schwarzen Blatttees von Schritt b) unter Vakuum von weniger als 600 Pascal und bei einer Temperatur von -60°C bis +60°C, um das Teeprodukt zu erhalten.

2. Verfahren, wie im Anspruch 1 beansprucht, wobei das im Schritt (b) zugegebene Wasser in einer Menge von 40 bis 70 Gewichts-% des schwarzen Blatttees vorliegt.

3. Verfahren, wie im Anspruch 1 oder Anspruch 2 beansprucht, wobei der schwarze Blatttee, bereitgestellt im Schritt (a), durch Verarbeitung der Camellia sinensis-Pflanze erhalten wird.

4. Verfahren, wie in irgendeinem der Ansprüche 1 bis 3 beansprucht, wobei der schwarze Blatttee, bereitgestellt im Schritt (a), unter Anwendung eines Verfahrens hergestellt wird, das die Schritte umfasst:

  i. Heranziehen von frischem Teeblatt;
  ii. Durchführen einer Zerkleinerung des Blatts; und
  iii. Fermentieren des zerkleinerten Blatts, indem das Blatt 15 Minuten bis 3 Stunden lang bei einer Temperatur von 15 bis 35°C gehalten wird,
  iv. Trocknen des fermentierten Teeblattes bei einer Temperatur von 50 bis 150°C.

5. Verfahren, wie im Anspruch 4 beansprucht, wobei vor dem Schritt ii. ein Schritt des Welkens liegt.

6. Verfahren, wie in irgendeinem der Ansprüche 1 bis 3 beansprucht, wobei der schwarze Blatttee, bereitgestellt im Schritt (a), durch ein Verfahren hergestellt wird, das die Schritte umfasst:

i. Heranziehen von frischem Teeblatt;
ii. Inkubieren des frischen Blatts bei einer Temperatur in dem Bereich von 4°C bis 60°C unter anaeroben Bedingungen während einer Dauer von 4 bis 36 Stunden;
iii. Durchführen einer Zerkleinerung des inkubierten Blatts; und
iv. Fermentieren des zerkleinerten Blatts, indem das Blatt 15 Minuten bis 3 Stunden lang bei einer Temperatur von 15 bis 35°C gehalten wird;
v. Trocknen des fermentierten Teeblatts bei einer Temperatur von 50 bis 150°C.

7. Verfahren, wie im Anspruch 6 beansprucht, wobei die anaeroben Bedingungen erreicht werden durch:

A. Anordnen des frischen Teeblatts in einem Behälter und Verschließen des Behälters oder
B. Anordnen des Teeblatts in einem Behälter, Durchspülen des Behälters mit einem Gas, anders als Sauerstoff, und Schließen des Behälters oder Anordnen des Blatts in einer luftdichten Kammer oder unter Vakuum.

8. Blattteemischung, umfassend 5 bis 50% eines Teeprodukts, wie nach irgendeinem der Ansprüche 1 bis 7 erhalten, wobei das Teeprodukt ein Oberflächenreflektionsvermögen von größer als 30%, gemessen bei einer Wellenlänge von 750 nm, aufweist und/oder wobei die Schüttdichte des Teeprodukts weniger als 0,3 g/ml beträgt.

## Revendications

1. Procédé de production d'un produit de thé comprenant les étapes de ;

a) fourniture de thé noir en feuille avec une teneur en humidité inférieure à 5 % ;
b) addition d'eau dans une quantité de 30 à 80 % en masse du thé noir en feuille de l'étape a) ; et,
c) lyophilisation ou séchage sous vide de la feuille de thé noir de l'étape b) sous un vide inférieur à 600 Pascal et à une température de -60°C à +60°C pour obtenir le produit de thé.

2. Procédé selon la revendication 1, dans lequel l'eau ajoutée dans l'étape (b) est présente dans une quantité de 40 à 70 % en masse de thé noir en feuille.

3. Procédé selon la revendication 1 ou la revendication 2, dans lequel le thé noir en feuille fourni dans l'étape (a) est obtenu par traitement de plante de *Camellia sinensis.*

4. Procédé selon l'une quelconque des revendications 1 à 3, dans lequel le thé noir en feuille fourni dans l'étape (a) est préparé en utilisant un procédé comprenant les étapes de :

i. prélèvement de feuille de thé fraîche ;
ii. soumission de la feuille à un broyage ; et
iii. fermentation de la feuille broyée en maintenant la feuille à une température de 15 à 35°C pendant de 15 minutes à 3 heures ;
iv. séchage de la feuille de thé fermentée à une température de 50 à 150°C.

5. Procédé selon la revendication 4, dans lequel il y a une étape de séchage à l'air avant l'étape ii.

6. Procédé selon l'une quelconque des revendications 1 à 3, dans lequel le thé noir en feuille fourni dans l'étape (a) est préparé par un procédé comprenant les étapes de :

i. prélèvement de feuille de thé fraîche ;
ii. incubation de la feuille fraîche à une température dans l'intervalle de 4°C à 60°C dans des conditions anaérobies sur une période 4 à 36 heures ;
iii. soumission de la feuille incubée à un broyage ; et
iv. fermentation de la feuille broyée en maintenant la feuille à une température de 15 à 35°C pendant de 15 minutes à 3 heures ;
v. séchage de la feuille de thé fermentée à une température de 50 à 150°C.

**7.** Procédé selon la revendication 6, dans lequel les conditions anaérobies sont réalisées par :

    A. disposition de la feuille de thé fraîche dans un récipient, et fermeture du récipient, ou ;
    B. disposition de la feuille de thé dans un récipient, purge d'un gaz différent de l'oxygène à travers le récipient, et fermeture du récipient, ou disposition de la feuille dans une chambre étanche à l'air ou sous vide.

**8.** Mélange de thé en feuille qui comprend de 5 à 50 % d'un produit de thé comme obtenu par l'une quelconque des revendications 1 à 7, dans lequel le produit de thé présente une réflectivité de surface supérieure à 30 % comme mesurée à une longueur d'onde de 750 nm et/ou dans lequel la masse volumique apparente du produit de thé est inférieure à 0,3 g/mL.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080118602 A, Unilever
- US 3873745 A, Nestle

- WO 2012133901 A